# EUROPEAN PATENT APPLICATION

(11) **EP 4 765 347 A1**
(43) Date of publication of application: **24.06.2026**
(21) Application number: 25222273.2
(22) Date of filing: 10.12.2025
(51) Int. Cl.: H01M 50/10, H01M 50/50

(54) **SECONDARY BATTERY AND METHOD OF MANUFACTURING THE SAME**

(30) Priority: 19.12.2024 KR 20240190818
(71) Applicant: SK On Co., Ltd., Seoul 03161 (KR)
(72) Inventor: JEONG, Taek Eon, 34124 Daejeon (KR); KIM, Min Gyu, 34124 Daejeon (KR); SEO, Gi Jeong, 34124 Daejeon (KR)
(74) Representative: Prüfer & Partner mbB Patentanwälte · Rechtsanwälte

(57) **Abstract**

According to the present disclosure, a secondary battery is provided, which comprises an electrode assembly provided with an uncoated portion, a first current collector and a second current collector each comprising a connection portion electrically connected to the uncoated portion of the electrode assembly, a case having one open side to accommodate the electrode assembly, the first current collector, and the second current collector, and a cap plate covering the open side of the case.

## Description

### TECHNICAL FIELD

The present disclosure relates to a secondary battery and a method of manufacturing the same.

### BACKGROUND

A secondary battery is one of the energy storage devices that can be charged and discharged through electrochemical reactions. The secondary battery may be used in various fields using electrical energy. For example, the secondary battery is widely used in the field of mobile devices such as mobile phones, notebooks, and tablets, and broader use is being explored in the field of transportation such as vehicles, aircraft, and ships. In addition, demand for secondary batteries is increasing in the field of energy storage systems (ESSs) for utilizing surplus power.

The secondary batteries may be classified into a pouch type, a prismatic type, a cylindrical type, a coin type, and the like depending on the packaging form.

Among these, demand for cylindrical secondary batteries has been rapidly increasing in recent years in the vehicle field due to advantages such as standardized size and ease of mass production.

### SUMMARY

Embodiments of the present disclosure may provide a secondary battery and a method of manufacturing the same.

Some embodiments of the present disclosure may provide a secondary battery having reduced heat generation and a method of manufacturing the same.

Some embodiments of the present disclosure may provide a secondary battery having improved uniformity in use of an electrode active material during charging and discharging and a method of manufacturing the same.

Some embodiments of the present disclosure may provide a secondary battery having improved energy density and a method of manufacturing the same.

At least some embodiments of the present disclosure may be widely applied in the field of green technology such as an electric vehicle, a battery charging station, and solar power generation and wind power generation utilizing batteries. In addition, at least some embodiments of the present disclosure may be used in an eco-friendly electric vehicle, a hybrid vehicle, and the like to prevent climate change by suppressing air pollution and greenhouse gas emissions.

According to an aspect of the present disclosure, there is provided a secondary battery comprising an electrode assembly provided with an uncoated portion, a first current collector and a second current collector each comprising a connection portion electrically connected to the uncoated portion of the electrode assembly, a case having one open side to accommodate the electrode assembly, the first current collector, and the second current collector, and a cap plate covering the open side of the case.

In some embodiments, the uncoated portions may be provided at both ends in a longitudinal direction of the electrode assembly.

In some embodiments, the case may be a prismatic case.

In some embodiments, each of the first current collector and the second current collector may comprise a terminal portion connected to the connection portion and protruding through the cap plate.

In some embodiments, the terminal portion may have a bent shape with respect to the connection portion.

In some embodiments, the uncoated portion may be folded in a width direction of the electrode assembly, and the connection portion may be electrically connected to the folded uncoated portion.

In some embodiments, the uncoated portion and the connection portion may be welded to each other.

In some embodiments, the folding of the uncoated portion may be performed by a back plate inserted in the width direction of the electrode assembly.

In some embodiments, a plurality of electrode assemblies may be stacked in a width direction of the electrode assembly.

According to another aspect of the present disclosure, there is provided a method of manufacturing the secondary battery comprising preparing an electrode assembly, folding an uncoated portion in a width direction of the electrode assembly, and electrically connecting the uncoated portion and a connection portion.

In some embodiments, the method may further comprise inserting a back plate into the uncoated portion of the prepared electrode assembly in the width direction of the electrode assembly.

In some embodiments, the method may further comprise removing the inserted back plate after electrically connecting the uncoated portion and the connection portion.

In some embodiments, the electrically connecting of the uncoated portion and the connection portion may comprise bringing the connection portion into contact with the folded uncoated portion and welding the connection portion and the uncoated portion.

In some embodiments, the electrically connecting of the uncoated portion and the connection portion may further comprise pressing a mask onto the connection portion.

In some embodiments, the welding of the connection portion and the uncoated portion may be performed in a direction opposite to a folding direction of an end portion of the uncoated portion

In some embodiments, the welding of the connection portion and the uncoated portion may be performed in the same direction as a folding direction of an end portion of the uncoated portion.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is an exploded perspective view of a secondary battery according to one embodiment of the present disclosure;
FIG. 2 is a perspective view of a portion of the secondary battery illustrated in FIG. 1;
FIG. 3 is a plan view of a portion of the secondary battery illustrated in FIG. 1;
FIG. 4 is a plan view of a portion of a secondary battery according to another embodiment of the present disclosure;
FIG. 5 is a first operational view illustrating a method of manufacturing the secondary battery according to the present disclosure;
FIG. 6 is a second operational view illustrating the method of manufacturing the secondary battery according to the present disclosure; and
FIG. 7 is a third operational view illustrating the method of manufacturing the secondary battery according to the present disclosure.

### DETAILED DESCRIPTION OF EXEMPLARY EMBODIMENTS

Hereinafter, the present disclosure will be described in detail with reference to the accompanying drawings. However, the following description is merely exemplary and is not intended to limit the present disclosure to the specific embodiments illustrated.

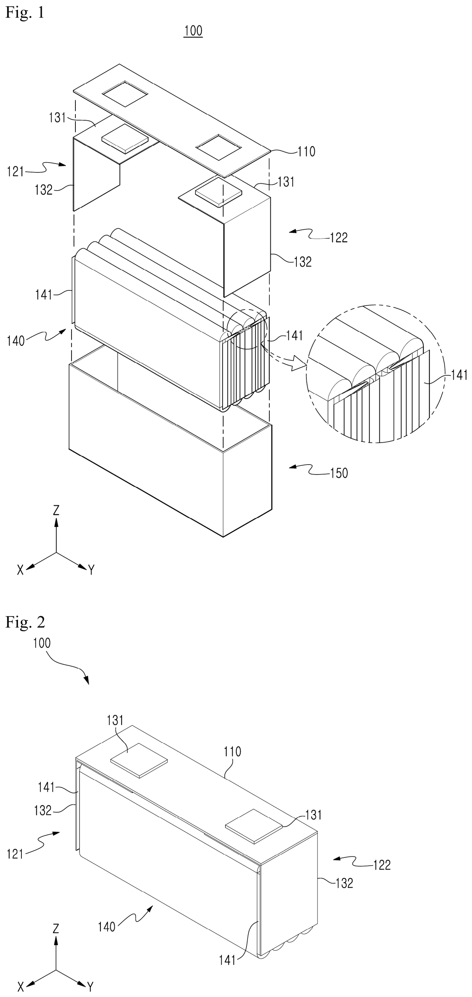

FIG. 1 is an exploded perspective view of a secondary battery according to one embodiment of the present disclosure, and FIG. 2 is a perspective view of a portion of the secondary battery illustrated in FIG. 1.

Referring to FIGS. 1 and 2, according to one embodiment of the present disclosure, a secondary battery 100 may be provided, which comprises an electrode assembly 140 provided with a uncoated portion 141, a first current collector 121 and a second current collector 122 each comprising a connection portion 132 electrically connected to the uncoated portion 141 of the electrode assembly 140, a case 150 having one open side to accommodate the electrode assembly 140, the first current collector 121, and the second current collector 122, and a cap plate 110 covering the open side of the case 150.

Specifically, the secondary battery 100 may comprise the electrode assembly 140. The electrode assembly 140 may have a structure in which an electrode plate and a separator are stacked. In addition, the electrode plate may have a structure in which a positive electrode active material or a negative electrode active material is applied to the current collectors. The electrode plates and separators may be provided in various stacked structures. In the embodiments of the present disclosure, the stacked structure of the electrode plates and separators is not particularly limited. For example, the electrode assembly 140 may be provided in a winding type, stacking type, z-folding type, stack-folding type, or the like. For reference, in the illustrated embodiment, a winding type electrode assembly 140 is illustrated.

According to one embodiment, the electrode assembly 140 may comprise the uncoated portion 141. The uncoated portion 141 may be provided as a portion of each of the current collectors to which a positive electrode active material or negative electrode active material is not applied. In other words, the electrode plate may comprise a coated portion in which an active material is applied to the current collectors, and the uncoated portion 141 in which the active material is not applied, and thus the uncoated portion 141 may be provided as the portion of each of the current collectors to which the active material is not applied.

In one embodiment, the uncoated portions 141 may be provided at both ends in the longitudinal direction of the electrode assembly 140. That is, in one embodiment, the electrode assembly 140 may be provided as a bidirectional electrode assembly in which the uncoated portions 141 are disposed at both ends in the longitudinal direction (with reference to the drawing, at both ends in a Y direction).

In addition, the uncoated portion 141 may be connected to a positive electrode terminal or a negative electrode terminal of the secondary battery as an electrode tab. In addition, the electrode assembly may have a unidirectional form in which uncoated portions of a positive electrode plate and a negative electrode plate are provided in the same direction in the electrode assembly, or a bidirectional form in which uncoated portions of the positive electrode plate and the negative electrode plate are provided in opposite directions. However, compared to the unidirectional electrode assemblies, the bidirectional electrode assemblies have the advantage of generating less heat at the terminals and providing more uniform use of an active material during charging and discharging, thereby improving battery lifetime. Some embodiments of the present disclosure may be effectively applied to such bidirectional electrode assemblies.

Meanwhile, some secondary batteries may have a structure in which a positive electrode terminal and a negative electrode terminal are disposed on the same surface. For example, as illustrated, a prismatic secondary battery 100 may have a structure that is roughly in the shape of a rectangular parallelepiped, with both a positive electrode terminal and a negative electrode terminal provided on one surface (an upper surface in the drawing). Such a secondary battery 100 may easily apply a unidirectional electrode assembly but may have difficulties in applying the above-described bidirectional electrode assembly. Some embodiments of the present disclosure may contribute to facilitating the application of bidirectional electrode assemblies in secondary batteries having positive and negative electrode terminals disposed on the same surface through the technical configurations to be described below.

Meanwhile, according to one embodiment, the case 150 may be provided as a prismatic case. That is, in one embodiment, the secondary battery 100 may be provided as a prismatic secondary battery comprising the bidirectional electrode assembly 140. The secondary battery 100 may share the technical advantages of both the bidirectional electrode assembly 140 and the prismatic secondary battery 100. That is, heat generation at terminals may be reduced, uniformity in use of an active material during charging and discharging may be improved, and battery lifetime may be enhanced. In addition, as will be described below, energy density may be improved.

Meanwhile, according to one embodiment, the first current collector 121 and the second current collector 122 may be electrically connected to the uncoated portion 141 at one end in the longitudinal direction and the uncoated portion 141 at the other end of the electrode assembly 140, respectively. That is, the connection portion 132 of the first current collector 121 may be electrically connected to one of the uncoated portions 141 at both ends, and the connection portion 132 of the second current collector 122 may be electrically connected to the other. For example, the first current collector 121 may be electrically connected to an uncoated portion of a positive electrode plate, and the second current collector 122 may be electrically connected to an uncoated portion of a negative electrode plate, or vice versa.

Meanwhile, according to one embodiment, the secondary battery 100 may comprise the electrode assembly 140 and the case 150 accommodating the electrode assembly 140, and the first current collector 121 and the second current collector 122 electrically connected to the electrode assembly 140. The case 150 may have one open side (in a +Z direction based on the drawing) to accommodate the electrode assembly 140, the first current collector 121, and the second current collector 122 therein. Meanwhile, the cap plate 110 may be coupled to the case 150 to close the open side of the case 150.

Meanwhile, according to one embodiment, one or more electrode assemblies 140 may be disposed inside the case 150. According to one embodiment, a plurality of electrode assemblies 140 may be provided. For example, FIG. 1 illustrates an example in which four electrode assemblies 140 are stacked and accommodated in the case 150. However, the number of electrode assemblies 140 is not limited to that illustrated and may vary.

In addition, as will be described in more detail below, the electrode assembly 140 may have a structure in which the uncoated portion 141 is folded when a back plate 411 is inserted. For example, as illustrated, two electrode assemblies 140 may be stacked to form a unit, and the electrode assemblies 140 forming each unit may have uncoated portions 141 that are folded together when the back plate 411 is inserted. Meanwhile, although the illustrated embodiment exemplifies a case in which two electrode assemblies 140 form one unit, the number of electrode assemblies 140 forming the unit may be one or more and is not necessarily limited to that illustrated.

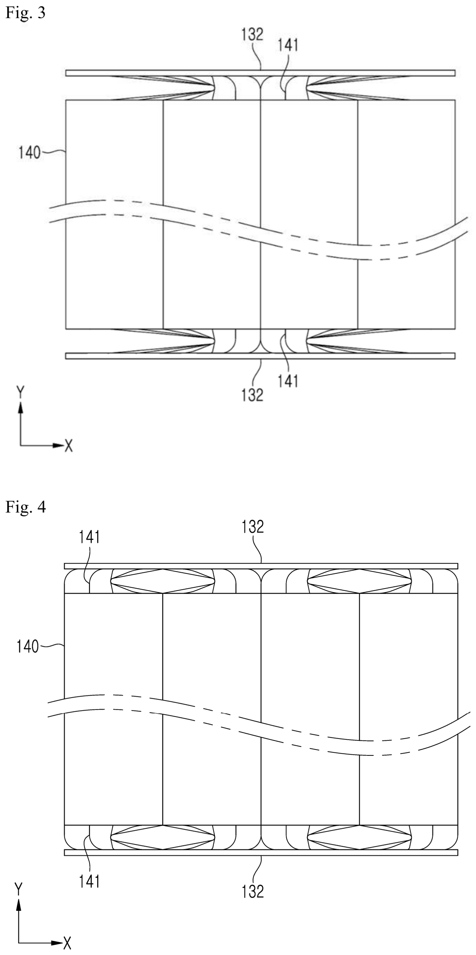

In addition, in the unit formed by stacking electrode assemblies 140, the folded uncoated portion 141 may be electrically connected to the connection portion 132. One or more stacked units may be electrically connected to the connection portion 132. For example, FIG. 3, which will be described below, illustrates an example in which two electrode assemblies 140 on the left side of the drawing and two electrode assemblies 140 on the right side of the drawing each form one unit, and the units are stacked in the X direction and electrically connected to the connection portion 132.

Meanwhile, according to one embodiment, each of the first current collector 121 and the second current collector 122 may comprise a terminal portion 131 connected to the connection portion 132 and protruding through the cap plate 110. That is, each of the first current collector 121 and the second current collector 122 may comprise the connection portion 132 and the terminal portion 131. The connection portion 132 may be connected to the uncoated portion 141 at one end or the other end of the electrode assembly 140 of each current collector, and the terminal portion 131 may be provided to protrude through the cap plate 110. In one embodiment, the first current collector 121 and the second current collector 122 may have an integrated structure in which the connection portion 132 and the terminal portion 131 are integrally formed. The integrated structure may simplify the configuration by eliminating a connecting member such as a lead member for providing a terminal, and may contribute to improving energy density by increasing utilization of the internal space.

In one embodiment, the terminal portion 131 may have a bent shape with respect to the connection portion 132. For example, the connection portion 132 of each current collector may be disposed to face the uncoated portions 141 provided at both ends in the longitudinal direction of the electrode assembly 140 in the Y direction, and the terminal portion 131 may be bent with respect to the connection portion 132 and disposed to face the electrode assembly 140 in the Z direction. Accordingly, since the connection portion 132 and the terminal portion 131 are provided in a bent form, the positive electrode terminal and the negative electrode terminal may be disposed on the same surface even when the bidirectional electrode assembly 140 is applied.

FIG. 3 is a plan view of a portion of the secondary battery illustrated in FIG. 1

Referring to FIG. 3, according to one embodiment, the uncoated portion 141 may be folded in a width direction of the electrode assembly 140, and the connection portion 132 may be electrically connected to an end portion of the uncoated portion 141 that is folded.

Specifically, the uncoated portion 141 may be folded in the width direction of the electrode assembly 140, that is, in a +X direction and/or -X direction. In addition, the uncoated portion 141 may be folded inward or outward in the width direction. For example, some uncoated portions 141 may be folded in the +X direction (or -X direction) at bases connected to the electrode assembly 140, while the remaining end portions may be folded in the -X direction (or +X direction). In addition, some uncoated portions 141 may have bases connected to the electrode assembly 140 that extend in a +Y direction (or -Y direction) without folding, while the remaining end portions may be folded in the +X direction or -X direction.

In addition, one or more electrode assemblies 140 may be provided in a stacked form. One or more electrode assemblies 140 may form one unit in which the uncoated portions 141 are folded together, and one or more such electrode assembly units may be stacked and accommodated in the case 150. For example, FIG. 3 illustrates an example in which two electrode assemblies 140 are stacked to form one unit, and two such units are stacked. In the drawing, two electrode assemblies 140 in the -X direction may form one unit in which the uncoated portions 141 at both ends in the Y direction are folded together, and two electrode assemblies 140 in the +X direction may form one unit in which the uncoated portions 141 at both ends in the Y direction are folded together.

FIG. 4 is a plan view of a portion of a secondary battery according to another embodiment of the present disclosure.

Focusing on the differences from the embodiment illustrated in FIG. 3, electrode assemblies 140 may be disposed such that uncoated portions 141 of adjacent electrode assemblies 140 are folded in opposite directions. That is, FIG. 4 illustrates an example in which each electrode assembly 140 forms one unit, and the units are stacked. In addition, each electrode assembly 140 may be stacked such that the folding direction of the uncoated portion 141 is opposite to that of an adjacent electrode assembly 140.

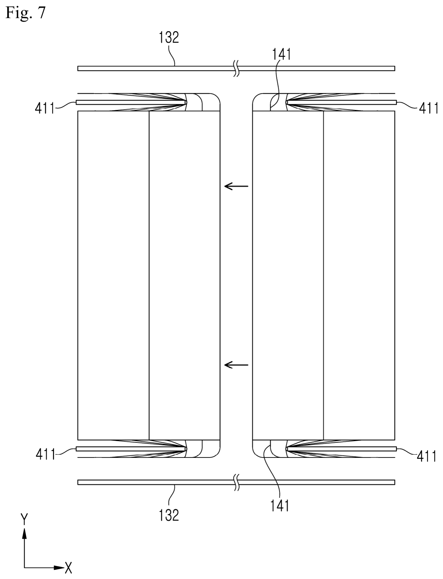

In the embodiments of the present disclosure, the form in which the uncoated portion 141 is folded and the form in which the units of the electrode assembly 140 are stacked are not necessarily limited to those exemplified above. However, the folding of the uncoated portion 141 and the stacking of the units of the electrode assembly 140 may be performed in a form that facilitates the removal of a back plate 411 after the uncoated portion 141 and the connection portion 132 are electrically connected. For example, FIG. 3 illustrates an example in which the uncoated portion 141 and the connection portion 132 are electrically connected, and then the uncoated portion 141 is folded and the units of the electrode assembly 140 are stacked such that the back plate 411 may be easily removed on both sides in the X direction (see FIG. 7).

Meanwhile, the uncoated portion 141 may have a shape extending from the electrode assembly 140 to both sides in the Y direction based on the drawing, and an end portion of the uncoated portion 141 may be folded to one side or the other side in the X direction, and thus the connection portion 132 may be electrically connected to an end portion of the folded uncoated portion 141.

According to one embodiment, the uncoated portion 141 and the connection portion 132 may be welded. Specifically, the uncoated portion 141 and the connection portion 132 may be electrically connected through welding, the end portion of the uncoated portion 141 is folded to form a welding surface with the connection portion 132, and the connection portion 132 may be welded while being supported on the welding surface. In this manner, the end portion of the uncoated portion 141 may be folded to easily secure the welding surface with the connection portion 132, and the overall volume of the electrically connected electrode assembly 140 and the first and second current collectors 121 and 122 may be reduced, thereby improving the energy density of the secondary battery 100.

Meanwhile, the length of the uncoated portion 141 extending in the Y direction from the electrode assembly 140 should have a suitable length that allows easy folding and facilitates welding with the connection portion 132 after folding. The inventors have found that when the uncoated portion 141 has a length of 3 mm or more, folding and welding with the connection portion 132 after folding may be properly performed. However, in the embodiments of the present disclosure, the length of the uncoated portion 141 is not particularly limited and may be appropriately adjusted in consideration of the above description.

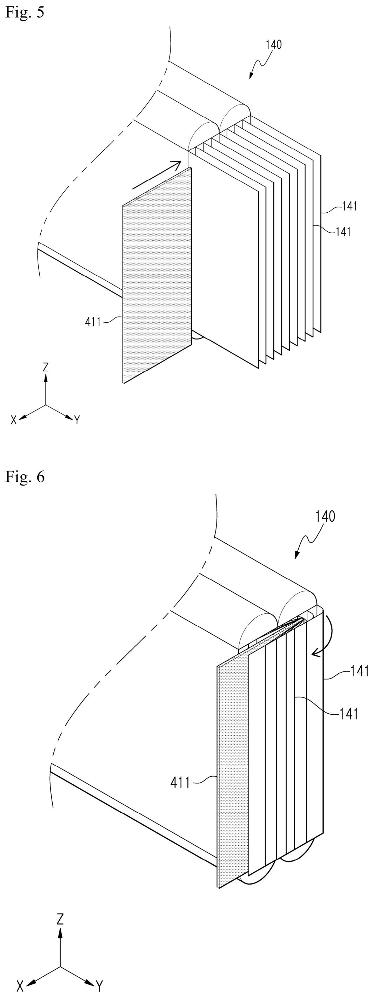

According to one embodiment, the folding of the uncoated portion 141 may be performed by the back plate 411 inserted in the width direction of the electrode assembly 140 (see FIG. 5). The back plate 411 may be inserted in the width direction, that is, in the X direction, of the electrode assembly 140, and the uncoated portion 141 may be folded as the back plate 411 is inserted. In some uncoated portions 141, bases and the remaining end portions connected to the electrode assembly 140 may be folded together by the inserted back plate 411, and may be folded in opposite directions to each other. In addition, in some uncoated portions 141, bases connected to the electrode assembly 140 may not be folded but extend vertically from the electrode assembly 140, and only the remaining end portions may be folded.

According to one embodiment, a plurality of electrode assemblies 140 may be provided, and the plurality of electrode assemblies 140 may be disposed to be stacked in the width direction. That is, based on the drawing, four electrode assemblies 140 may be stacked in the X direction. The manner in which the uncoated portions 141 at one end in the longitudinal direction of the stacked electrode assemblies 140 are folded and the manner in which the uncoated portions 141 at the other end are folded may be identical or symmetrical to each other.

According to one embodiment, one electrode assembly 140 or a plurality of stacked electrode assemblies 140 may form a unit, and uncoated portions 141 of the electrode assemblies 140 belonging to each unit may be folded together. In addition, one unit or a plurality of stacked units may have uncoated portions 141 of the electrode assemblies 140 belonging thereto electrically connected to the connection portion 132. For example, FIG. 3 illustrates an example in which two electrode assemblies 140 form one unit, and two such units are stacked.

Hereinafter, a method of manufacturing the secondary battery 100 according to one embodiment of the present disclosure will be described. As described above, in the secondary battery 100 according to one embodiment of the present disclosure, the electrode assemblies 140 may form units, and the units may be stacked and electrically connected to the connection portion 132. Accordingly, a process of forming the units of the electrode assembly 140 will first be described, followed by a process in which the units are stacked and electrically connected to the connection portion 132.

According to one embodiment of the present disclosure, the method of manufacturing the secondary battery may comprise: preparing the electrode assembly 140; folding the uncoated portion 141 in a width direction of the electrode assembly 140; and electrically connecting the uncoated portion 141 and the connection portion 132. In addition, in one embodiment, the method may further comprise accommodating the electrically connected electrode assembly 140, the first current collector 121, and the second current collector 122 in the case 150; and coupling the cap plate 110 to an open side of the case 150.

In the preparing of the electrode assembly 140, one or more electrode assemblies 140 may be prepared, and one or more electrode assemblies 140 may be stacked to form a unit. In the drawing, two electrode assemblies 140 may be stacked to form one unit. In this operation, the uncoated portion 141 may be provided in an unfolded flat form (see FIG. 5).

In the folding of an end portion of the uncoated portion 141 in the width direction of the electrode assembly 140, the uncoated portions 141 provided at one end and the other end in the longitudinal direction of the electrode assembly 140 may be folded in the width direction of the electrode assembly 140. The manner in which the uncoated portion 141 at one end in the longitudinal direction is folded and the manner in which the uncoated portion 141 at the other end is folded may be identical or symmetrical to each other.

FIG. 5 is a first operational view illustrating a method of manufacturing the secondary battery according to the present disclosure, and FIG. 6 is a second operational view illustrating the method of manufacturing the secondary battery according to the present disclosure.

Referring to FIGS. 5 and 6, according to one embodiment, the method may further comprise inserting the back plate 411 into the uncoated portion 141 of the prepared electrode assembly 140 in the width direction of the electrode assembly 140. In some cases, such a back plate 411 may function to reduce damage to the electrode assembly 140 caused by a welding laser during welding of the uncoated portion 141 and the connection portion 132, as will be described below.

Meanwhile, according to one embodiment, the back plate 411 may have a predetermined thickness. When the thickness of the back plate 411 is not sufficiently large, it may be difficult to sufficiently reduce damage to the electrode assembly 140 caused by the welding laser, and due to low durability, the back plate 411 may easily warp during laser welding. The inventors have found that when the back plate 411 has a thickness of 1 mm or more, the electrode assembly 140 may be sufficiently protected and the occurrence of warping may be reduced. Conversely, when the back plate 411 is excessively thick, folding of the uncoated portion 141 may become difficult, which requires consideration of the length by which the uncoated portion 141 extends from the electrode assembly 140. The inventors have found that when the back plate 411 has a thickness of 3 mm or less, folding of the uncoated portion 141 may be properly performed. However, the thickness of the back plate 411 may be appropriately adjusted in consideration of the above description and is not necessarily limited to the illustrated examples.

Meanwhile, according to one embodiment, the back plate 411 may be inserted in the width direction of the electrode assembly 140, that is, in the -X direction or +X direction, and folding of the uncoated portion 141 may be performed as the back plate 411 is inserted. The insertion of the back plate 411 and the folding of the uncoated portion 141 may be performed simultaneously.

Meanwhile, according to one embodiment, the method may further comprise electrically connecting the uncoated portion 141 and the connection portion 132 and then removing the inserted back plate 411. Specifically, after the insertion of the back plate 411 and the folding of the uncoated portion 141 are performed, the uncoated portion 141 may be electrically connected to the connection portion 132. In addition, after the uncoated portion 141 and the connection portion 132 are electrically connected, the back plate 411 may be removed in a direction opposite to the direction in which it is inserted.

According to one embodiment, in the operation of electrically connecting the uncoated portion 141 and the connection portion 132, the uncoated portion 141 and the connection portion 132 may be welded. According to one embodiment, the operation of electrically connecting the uncoated portion 141 and the connection portion 132 may comprise bringing the connection portion 132 into contact with the folded uncoated portion 141 and welding the connection portion 132 and the uncoated portion 141.

According to one embodiment, the insertion of the back plate 411 and the resulting folding of the uncoated portion 141 may be performed in a direction that facilitates the removal of the back plate 411 after the uncoated portion 141 and the connection portion 132 are electrically connected, as described above. For example, the drawing illustrates a form in which the uncoated portion 141 is folded to facilitate the removal of the back plate 411 in the X direction after the uncoated portion 141 and the connection portion 132 are electrically connected.

FIG. 7 is a third operational view illustrating the method of manufacturing the secondary battery according to the present disclosure.

Referring to FIG. 7, the end portion of the uncoated portion 141 may be folded to form a welding surface with the connection portion 132, and the connection portion 132 may be brought into contact with the welding surface. In addition, the electrical connection between the uncoated portion 141 and the connection portion 132 may be performed by welding. According to one embodiment, the uncoated portion 141 and the connection portion 132 may be electrically connected by laser welding, and the laser welding may be performed while the units of the electrode assembly 140 are stacked. FIG. 7 illustrates an example in which two units are stacked and the uncoated portion 141 and the connection portion 132 are electrically connected.

Meanwhile, according to one embodiment, the method may further comprise pressing a mask (not shown) onto the connection portion 132. In this operation, the mask may be pressed onto the connection portion 132 to minimize a gap between the uncoated portion 141 and the connection portion 132. In addition, the back plate 411 may be appropriately removed before the mask is pressed.

Meanwhile, according to one embodiment, the welding of the connection portion 132 and the uncoated portion 141 may be performed in a direction opposite to the direction in which the end portion of the uncoated portion 141 is folded. According to one embodiment, the welding of the connection portion 132 and the uncoated portion 141 may be performed in the same direction as the direction in which the end portion of the uncoated portion 141 is folded. After the end portion of the uncoated portion 141 is folded and the connection portion 132 is brought into contact with the welding surface thus formed, welding may be performed while a welding unit moves in a direction opposite to the folding direction of the end portion of the uncoated portion 141, or welding may be performed while the welding unit moves in the same direction as the folding direction of the uncoated portion 141. The direction in which the uncoated portion 141 and the connection portion 132 are welded may be determined in consideration of the thickness of the folded and overlapping uncoated portions 141.

In the above, when the direction in which end portions of the uncoated portion 141 are folded is not consistent, laser welding may be performed locally. That is, for each region divided according to the folding direction of the end portion of the uncoated portion 141, a welding direction may be determined based on each folding direction. For example, in the embodiment illustrated in FIG. 7, on the left side where the end portions of the uncoated portions 141 are folded in the -X direction and the right side where the end portions of the uncoated portions 141 are folded in the +X direction, welding may be performed in the +X and -X directions, or in the -X and +X directions, respectively.

According to the secondary battery having such a structure and the manufacturing method thereof, heat generation may be reduced. That is, heat generation may be reduced by applying a bidirectional electrode assembly.

In addition, by applying the bidirectional electrode assembly, uniformity in use of the electrode active material during charging and discharging may be improved.

In addition, connection structures such as lead members for providing terminals may be eliminated, thereby simplifying the structure and improving utilization of the internal space, and thus energy density may be improved.

Some embodiments of the present disclosure can provide a secondary battery and a method of manufacturing the secondary battery.

Some embodiments of the present disclosure can provide a secondary battery having reduced heat generation and a method of manufacturing the same.

Some embodiments of the present disclosure can provide a secondary battery having improved uniformity in use of an electrode active material during charging and discharging and a method of manufacturing the same.

Some embodiments of the present disclosure can provide a secondary battery having improved energy density and a method of manufacturing the same.

However, the technical effects that may be obtained through the embodiments of the present disclosure are not necessarily limited to those described above. Other technical effects not described may be clearly understood by those skilled in the art to which the present disclosure pertains from other descriptions in the specification, comprising the detailed description.

Some of the aspects of the present disclosure are as follows:
Aspect 1: A secondary battery (100) comprising: an electrode assembly (140) provided with an uncoated portion (141); a first current collector (121) and a second current collector (122) each comprising a connection portion (132) electrically connected to the uncoated portion (141) of the electrode assembly (140); a case (150) having one open side to accommodate the electrode assembly (140), the first current collector (121), and the second current collector (122); and a cap plate (110) covering the open side of the case (150).
Aspect 2: The secondary battery (100) of aspect 1, wherein the uncoated portions (141) are provided at both ends in a longitudinal direction of the electrode assembly (140).
Aspect 3: The secondary battery (100) according to any one of the preceding aspects, wherein the case (150) is a prismatic case.
Aspect 4: The secondary battery (100) according to any one of the preceding aspects, wherein each of the first current collector (121) and the second current collector (122) comprises a terminal portion (131) connected to the connection portion (132) and protruding through the cap plate (110).
Aspect 5: The secondary battery (100) according to any one of the preceding aspects, wherein the terminal portion (131) has a bent shape with respect to the connection portion (132).
Aspect 6: The secondary battery (100) according to any one of the preceding aspects, wherein the uncoated portion (141) is folded in a width direction of the electrode assembly (140), and the connection portion (132) is electrically connected to the folded uncoated portion (141).
Aspect 7: The secondary battery (100) according to any one of the preceding aspects, wherein the uncoated portion (141) and the connection portion (132) are welded to each other.
Aspect 8: The secondary battery (100) according to any one of the preceding aspects, wherein the folding of the uncoated portion (141) is performed by a back plate (411) inserted in the width direction of the electrode assembly (140).
Aspect 9: A method of manufacturing the secondary battery according to any one of the preceeding aspects, comprising: preparing the electrode assembly (140); folding the uncoated portion (141) in a width direction of the electrode assembly (140); and electrically connecting the uncoated portion (141) and the connection portion (132).
Aspect 10: The method of aspect 9, further comprising inserting a back plate (411) into the uncoated portion (141) of the prepared electrode assembly (140) in the width direction of the electrode assembly (140).
Aspect 11: The method according to aspect 9 or aspect 10, further comprising removing the inserted back plate (411) after electrically connecting the uncoated portion (141) and the connection portion (132).
Aspect 12: The method according to any one of aspect 9 to aspect 11, wherein the electrically connecting of the uncoated portion (141) and the connection portion (132) comprises: bringing the connection portion (132) into contact with the folded uncoated portion (141); and welding the connection portion (132) and the uncoated portion (141).
Aspect 13: The method according to any one of aspect 9 to aspect 12, wherein the electrically connecting of the uncoated portion (141) and the connection portion (132) further comprises pressing a mask onto the connection portion (132).
Aspect 14: The method according to any one of aspect 9 to aspect 13, wherein the welding of the connection portion (132) and the uncoated portion (141) is performed in a direction opposite to a folding direction of an end portion of the uncoated portion (141).
Aspect 15: The method according to any one of aspect 9 to aspect 14, wherein the welding of the connection portion (132) and the uncoated portion (141) is performed in the same direction as a folding direction of an end portion of the uncoated portion (141).

The above description is merely an example of applying the principles of the present disclosure, and other configurations may be comprised without departing from the scope of the present disclosure.

## Claims

1. A secondary battery (100) comprising:
an electrode assembly (140) provided with an uncoated portion (141);
a first current collector (121) and a second current collector (122) each comprising a connection portion (132) electrically connected to the uncoated portion (141) of the electrode assembly (140);
a case (150) having one open side to accommodate the electrode assembly (140), the first current collector (121), and the second current collector (122); and
a cap plate (110) covering the open side of the case (150).

2. The secondary battery of claim 1, wherein the uncoated portions (141) are provided at both ends in a longitudinal direction of the electrode assembly (140).

3. The secondary battery according to any one of the preceeding claims, wherein the case (150) is a prismatic case.

4. The secondary battery according to any one of the preceeding claims, wherein each of the first current collector (121) and the second current collector (122) comprises a terminal portion (131) connected to the connection portion (132) and protruding through the cap plate (110).

5. The secondary battery according to any one of the preceeding claims, wherein the terminal portion (131) has a bent shape with respect to the connection portion (132).

6. The secondary battery according to any one of the preceeding claims, wherein the uncoated portion (141) is folded in a width direction of the electrode assembly (140), and
the connection portion (132) is electrically connected to the folded uncoated portion (141).

7. The secondary battery according to any one of the preceeding claims, wherein the uncoated portion (141) and the connection portion (132) are welded to each other.

8. The secondary battery according to any one of the preceeding claims, wherein the folding of the uncoated portion (141) is performed by a back plate (411) inserted in the width direction of the electrode assembly (140).

9. A method of manufacturing the secondary battery according to any one of the preceeding claims, comprising:
preparing the electrode assembly (140);
folding the uncoated portion (141) in a width direction of the electrode assembly (140); and
electrically connecting the uncoated portion (141) and the connection portion (132).

10. The method of claim 9, further comprising inserting a back plate (411) into the uncoated portion (141) of the prepared electrode assembly (140) in the width direction of the electrode assembly (140).

11. The method according to claim 9 or claim 10, further comprising removing the inserted back plate (411) after electrically connecting the uncoated portion (141) and the connection portion (132).

12. The method according to any one of claim 9 to claim 11, wherein the electrically connecting of the uncoated portion (141) and the connection portion (132) comprises:
bringing the connection portion (132) into contact with the folded uncoated portion (141); and
welding the connection portion (132) and the uncoated portion (141).

13. The method according to any one of claim 9 to claim 12, wherein the electrically connecting of the uncoated portion (141) and the connection portion (132) further comprises pressing a mask onto the connection portion (132).

14. The method according to any one of claim 9 to claim 13, wherein the welding of the connection portion (132) and the uncoated portion (141) is performed in a direction opposite to a folding direction of an end portion of the uncoated portion (141).

15. The method according to any one of claim 9 to claim 14, wherein the welding of the connection portion (132) and the uncoated portion (141) is performed in the same direction as a folding direction of an end portion of the uncoated portion (141).
